# EUROPÄISCHE PATENTANMELDUNG

(11) **EP 3 179 178 A1**
(43) Veröffentlichungstag der Anmeldung: **14.06.2017**
(21) Anmeldenummer: 16199257.3
(22) Anmeldetag: 17.11.2016
(51) Int. Cl.: F24J 2/46, F24J 2/42

(54) **SOLARANLAGE IM DRAIN-BACK VERFAHREN UND EIN VERFAHREN ZU DEREN BETRIEBNAHME**

(30) Priorität: 10.12.2015 DE 102015016074
(71) Anmelder: Northumbria Engineering and Technology, Ltd., Newcastle upon Tyne NE3 4XH (GB)
(72) Erfinder: Mayer, Isabella, 67500 Haguenau (FR)
(74) Vertreter: Schüssler, Andrea

(57) **Zusammenfassung**

Die Erfindung offenbart eine Solaranlage mit einen Sonnenkollektorfeld **(45),** einem Förderkreislauf aus Wärmetauscher **(22b)** in einer Schichtlanze **(22a)** im Speicher **(22)** und Leitungen **(4a, 44, 46)** in dem eine Pumpeneinheit **(1a)**, ein Auffanggefäß **(30),** eine Gasabscheideeinrichtung **(36)** sowie eine Ventileinheit **(29)** eingebaut sind. An dem Auffanggefäß **(30)** sind zwei Schaugläser **(31a und 31b)** angebracht, wobei das Auffanggefäß **(30)** so ausgelegt ist, daß durch das Schauglas **(31a)** das Füllniveau der Anlage im Stillstand begutachtet werden kann und durch das Schauglas **(31 b)** das Füllniveau der Anlage im Betreib begutachtet werden kann. Ferner ist das Auffanggefäß (30) mit einer Befüll-Vorrichtung **(34 und 35)** versehen. Die Vorlaufleitung **(44)** und das Auffanggefäß **(30)** sind über eine Ventileinheit **(29)** oberhalb vom Schauglas **(31 a)** mit einander verbunden, wobei der Abgang **(33)** von der Vorlaufleitung **(44)** zur Ventileinheit **(29)** auch oberhalb vom Schauglas **(31 a)** liegt. Das Volumen im Förderkreis oberhalb des Schauglases **(31a)** ist mit einem Inertgas gefüllt mit einem Druck der über Atmosphärendruck liegt. Die Erfindung offenbart ferner ein Verfahren zur Inbetriebnahme der Solaranlage.

## Beschreibung

Die Erfindung betrifft eine Solaranlage und ein Verfahren zur Inbetriebnahme einer Solaranlage. Bei der Solaranlage handelt es sich um eine thermische Drain-Back-Solaranlage mit einem Auffanggefäß, mit mindestens einem Sonnenkollektor, mindestens einer Pumpenvorrichtung und mindestens einem Wärmetauscher. Die Pumpenvorrichtung und das Auffanggefäß sind im Kreislauf zwischen Sonnenkollektor und Wärmetauscher angeordnet.

Bekannte thermische Drain-Back-Solaranlagen weisen oftmals in der Vorlaufleitung (Vorlauf), das ist die vom Sonnenkollektor kommende Leitung, die im Betrieb die aufgewärmte Wärmeträgerflüssigkeit zum Wärmespeicher führt, ein Auffanggefäß oder einen übergroß dimensionierten Wärmetauscher auf, welcher als Auffanggefäß fungiert, auf. Solche Anlagen sind z.B. in DE 10 2012 105 000 A1 oder DE 43 19 109 A1 beschrieben. Als Vorteil von Drain-Back-Solaranlagen wird oftmals herausgestellt, dass als Wärmeträger Wasser ohne Zusatz von einem Frostschutzmittel (z.B. Glykol) verwendet wird. In der Praxis hat sich aber der Einsatz von einem Gemisch von Wasser und Frostschutzmittel bewährt, weil oft geringe Mengen des Wärmeträgers im zu entleerenden Teil des Kreislaufs verbleiben und beim Gefrieren zu Schäden führen. Das Auffanggefäß in den Vorlauf zu platzieren, wie in DE 10 2012 105 000 A1 oder DE 43 19 109 A1 offenbart, führt jedoch zu Wärmeverlusten beim Betrieb der Anlage.

Drain-Back-Solaranlagen können einen offenen oder einen geschlossenen Kollektorkreislauf aufweisen, je nachdem, ob die im Kollektorkreislauf befindliche Luft mit der Umgebungsluft ausgetauscht oder nicht. Im entleerten Zustand weist der Kollektorkreislauf beider Varianten Atmosphärendruck auf. Ein Vorteil von solchen Drain-Back-Solaranlagen ist der Schutz vor Überhitzung. Bei hohen Temperaturen, typischer Weise über 120°C, wird die Anlage ausgeschaltet und die Wärmeträgerflüssigkeit wird aus dem Sonnenkollektor und aus den oberen Leitungen des Förderkreislaufs, die oberhalb des Auffanggefäßes liegen, in das Auffanggefäß entleert; die Teile oberhalb des Auffanggefäßes enthalten dann keine Wärmeträgerflüssigkeit, sondern Luft. Die temperaturempfindlichen Komponenten liegen unterhalb des Auffanggefäßes und sind damit geschützt. Offene Anlagen haben den Nachteil, dass die eingesetzten Pumpen sowohl Luft als auch Wasser fördern müssen und man daher nicht kostengünstige Komponenten einsetzen kann. Beide Formen haben den Nachteil, dass der Sauerstoff in der Luft zur Korrosion im System führt und die Lebensdauer der Anlage reduziert.

In der Offenlegungsschrift DE 199 53 493 A1 wird eine geschlossene Solaranlage offenbart, an dessen Förderkreislauf ein Schutzkreislauf angeschlossen ist, der ein flüssiges Schutzmedium, vorzugsweise thermisch stabiles Öl, enthält. Zum Schutz vor Frostschäden wird das Wasser aus dem Kollektor, welches als Wärmeträgermedium dient, mit dem Öl über eine Bypass-Leitung zwischen Vorratsbehälter und Rücklaufleitung getauscht. Hierdurch wird ein wirksamer Korrosionsschutz gewährleistet. Der Nachteil einer solchen Anlage ist der Einsatz eines teureren flüssigen Schutzmediums, zudem ist die Inbetriebnahme der Anlage mittels zweier Flüssigkeiten zeitraubend und fehleranfällig.

In der Offenlegungsschrift DE 43 19 109 A1 wird ein Verfahren für eine geschlossene Solaranlage offenbart, bei der Teile des Förderkreislaufs und der Sonnenkollektoren bei Frost mit einem Inertgas gefüllt wird. Ebenfalls in DE 43 19 109 A1 wird eine Anordnung offenbart, die einen Nebenkreislauf besitzt mit einem Membranbehälter, der eine Teilung aufweist, wobei der eine Teil eine Inertgaskammer und der andere Teil eine Wasserkammer ist. Bei Frostgefahr wird das Inertgas über eine zusätzliche Gasleitung in den Solarkreislauf gepumpt. Hierfür ist eine zweite Pumpe im Nebenkreislauf erforderlich. Damit ist der Nachteil einer aufwendigen Bauweise solcher Anlagen mit einem zusätzlichen Kreislauf, Membrangefäß, Gasleitung zwischen Gefäß und Kollektor und Pumpen verbunden.

Die Europäischen Patentschrift EP 1 692 435 B1 offenbart eine thermische Solaranlage mit einem Auffanggefäß in dem eine Gasabscheideeinrichtung eingebaut ist, wobei die Gasabscheideeinrichtung ein Gasabscheidematerial, wie beispielsweise Edelstahlwolle, aufweist. Die Gasabscheideeinrichtung ist in der Vorlaufleitung der Solaranlage angebracht. Die Gasabscheideeinrichtung ermöglicht den Einsatz kostengünstiger Umwälzpumpen. Der Nachteil ist, daß das Auffanggefäß im Vorlauf zu hohen Wärmeverlusten im Betrieb der Anlage führt. Ferner weist die in EP 1 692 435 B1 offenbarte Solaranlage eine geringe Benutzerfreundlichkeit hinsichtlich Montage und Dimensionierung auf.

In der Offenlegungsschrift DE 196 08 405 A1 wird eine Solaranlage offenbart, bei der eine Gasblase im Solarspeicher, der ohne Solarwärmetauscher ausgestaltet ist, das Auffanggefäß ersetzt. Um Korrosionsprobleme zu vermeiden, wird vorgeschlagen als Gas für die Gasblase Stickstoff zu verwenden. Die offenbarte Vorrichtung weist den Nachteil auf, daß entweder kein Frostschutz dem Wärmeträgermedium beigefügt wird, oder der ganze Speicher mit Frostschutz versehen wird. Im ersten Fall riskiert man Frostschäden und im zweiten Fall wird der Betrieb der Anlage wesentlich verteuert.

Die Europäischen Patentschrift EP 1 089 041 A2 offenbart eine thermische Solaranlage mit einem Auffanggefäß, das mit einer Gasabscheideeinrichtung verbunden ist. Konstruktionsbedingt dient das Auffanggefäß zum Aufnehmen überschüssigen Gases und nicht zur Entleerung der Anlage bei Frost oder bei zu hohen Temperaturen. Die offenbarte Anlage weist den Nachteil auf, daß für diese Betriebsbedingungen kein Schutz vorgesehen ist.

Die Aufgabe der vorliegenden Erfindung ist es, eine Solaranlage und ein Verfahren zur Inbetriebnahme einer Solaranlage bereitzustellen, mit welchen die eingangs genannten Nachteile bekannter Solaranlagen vermieden werden können. Insbesondere soll die Anlage korrosions- und frostbeständig sein.

Diese Aufgabe wird durch eine Solaranlage und ein Verfahren zur Inbetriebnahme einer Solaranlage mit den Merkmalen der unabhängigen Ansprüche gelöst. Vorteilhafte Ausgestaltungen ergeben sich aus den Unteransprüchen.

Die erfindungsgemäße Solaranlage umfasst mindestens einen Sonnenkollektor, mindestens einen Speicher, eine Pumpenvorrichtung und ein Auffanggefäß, die in einem Förderkreislauf für eine Wärmeträgerflüssigkeit angeordnet sind.

Unter einer Pumpenvorrichtung wird vorzugsweise eine Umwälzpumpe, eine Druckpumpe eine Saugpumpe oder eine Kombination aus mehreren solchen Pumpen verstanden.

Unter einem Speicher wird vorzugsweise ein Heizwasserspeicher, ein Brauchwasserspeicher, ein Speicher mit Wärmetauscher bzw. einem Wärmetauscherregister oder mit einer Schichtladelanze verstanden.

Als Wärmeträgerflüssigkeit können zum Beispiel Wasser oder ein Gemisch aus Wasser und Frostschutzmittel (beispielsweise Glykol) eingesetzt werden. Als Wärmeträgerflüssigkeit wird bevorzugt ein 60-90:40-10 Gew-%, bevorzugt 80:20 Gew-%, Gemisch aus Wasser und Glykol verwendet. Hierdurch wird vermieden, dass bei Frost verbleibende Reste des Wärmeträgermediums, z.B. in den Kollektoren, die Anlage beschädigen.

Der Speicher ist mittels einer Rücklaufleitung und einer Vorlaufleitung des Förderkreislaufs mit dem Sonnenkollektor verbunden. Das Auffanggefäß und ggf. die Pumpenvorrichtung sind in der Rücklaufleitung angeordnet. Mittels der Pumpenvorrichtung wird die durch den Sonnenkollektor erwärmte Wärmeträgerflüssigkeit über die Vorlaufleitung vom Sonnenkollektor zum Wärmespeicher und von dort die abgekühlte Wärmeträgerflüssigkeit über die Rücklaufleitung wieder zurück zum Sonnenkollektor gefördert. Das Auffanggefäß wird auch als Drain-Back-Behälter bezeichnet. Vorlauf und Auffanggefäß sind über einer Ventileinheit miteinander verbunden. Ferner ist im Vorlauf vorzugsweise ein Gasabscheider angebracht, dessen gasführende Leitung mit dem oberen Teil des Auffanggefäßes über die Ventilleitung verbunden ist.

Vorzugsweise besteht die Pumpenvorrichtung aus einer Umwälzpumpe, die in dem Bereich der Rücklaufleitung angeordnet ist, der im entleerten Stillstand der Solaranlage mit Wärmeträgerflüssigkeit gefüllt ist. Die Pumpenvorrichtung befördert bei einem Start/Befüllen der Solaranlage nach dem Stillstand, unmittelbar Wärmeträgerflüssigkeit zum Sonnenkollektor. Mit dem Ausdruck "entleerter Stillstand der Solaranlage" ist der Zustand gemeint, wenn die Pumpenvorrichtung nicht betrieben ist und der Sonnenkollektor von Wärmeträgerflüssigkeit entleert ist.

Alternativ kann die Pumpenvorrichtung in der Vorlaufleitung unterhalb des Gasabscheiders angeordnet sein.

Das Auffanggefäß ist zum Teil, bevorzugt ca. 25-75%, weiter bevorzugt ca. 50-60%, mit einem Inertgas, besonders bevorzugt mit mindestens einem der Gase oder mit einer Mischung von mindestens zwei oder mehreren der Gase Stickstoff, Argon, Xenon und/oder Helium gefüllt, mit einem Überdruck von 0.25 Bar (250 hPa) bis 6 Bar (6000 hPa), bevorzugt mit einem Überdruck von 0.5 Bar (500 hPa) bis 3,5 Bar (3500 hPa), besonders bevorzugt mit einem Überdruck von 0.5 Bar (500 hPa) bis 1,5 Bar (1500 hPa). Der Einsatz des Insertgases hat den Vorteil, dass Korrosion zurückgedrängt wird und die Einfriergefahr minimiert wird.

Die Anordnung des Auffanggefäßes in der Rücklaufleitung hat den Vorteil, dass das Auffanggefäß als Gasabscheider fungiert und die Trennung von Gas und Flüssigkeit besser funktioniert als bei einer Positionierung des Auffanggefäßes in der Vorlaufleitung. Entstehende Bläschen sind bei der Positionierung des Auffanggefäßes in der Rücklaufleitung auch kein Problem für die Funktionseffizienz der Solaranlage. Der Einbau des Auffanggefäßes in die Rücklaufleitung ist vorteilhaft, weil das Auffanggefäß hier kältere Wärmeträgerflüssigkeit enthält und damit geringere Wärmeverluste aufweist als beim Einbau in den Vorlauf.

Die Vorlaufleitung und das Auffanggefäß sind über eine Ventileinheit miteinander verbunden, wobei diese Verbindung vorzugsweise oberhalb einer Grenze zwischen der in dem Auffanggefäß befindlichen Wärmeträgerflüssigkeit und einem in dem Auffanggefäß befindlichen Gasbereich an das Auffanggefäß angebracht ist. Die Mündungen der Rücklaufleitung in das Auffanggefäß liegen vorzugsweise unterhalb dieser Grenze zwischen der Wärmeträgerflüssigkeit und dem Gas.

Die Grenze zwischen der Wärmeträgerflüssigkeit und dem Gas ergibt sich im Auffanggefäß, wenn die Solaranlage mit Wärmeträgerflüssigkeit befüllt wird bzw. nach deren Befüllung, wobei die Höhe der Grenze im Auffanggefäß je nach Betriebszustand variabel ist. Eine vorteilhafte Ausgestaltung der Anlage ist das Einführen von zwei Schaugläsern im Auffanggefäß. Das obere Schauglas ist derart angebracht, dass das Niveau der Wärmeträgerflüssigkeit bei entleerten Kollektoren kontrolliert werden kann, das untere dient der Prüfung des Füllstandes der Anlage im Betrieb.

Die Ventileinheit umfasst vorzugsweise ein Zwei-Wege-Ventil. Die Ventileinheit ist vorzugsweise über ein Steuergerät steuerbar/regelbar.

Im Betrieb und beim Füllvorgang der erfindungsgemäßen Solaranlage ist die Ventileinheit geschlossen, sodass kein Gas über die Vorlaufleitung zum Sonnenkollektor gelangen kann. Dies hat den Vorteil, dass die Pumpenvorrichtung auch bei sehr geringen Volumenströmen einfach modulierend und somit bei tiefen Drehzahlen betrieben werden kann. Im Stillstand der Solaranlage ist die Ventileinrichtung vorzugsweise geöffnet, sodass sowohl Vorlauf, Rücklauf und die Kollektoren mit Gas gefüllt werden.

Gemäß einem weiteren Aspekt der offenbarten Solaranlage ist in dem Speicher eine Schichtladelanze mit integriertem Wärmetauscher einzubauen. Durch besagte Lanze kann die von den Kollektoren erzeugte Energie in den Speicher geschichtet werden, um Entropieverluste zu reduzieren. Vorteilhaft ist ebenfalls das Einbringen eines Wärmetauschers für das Brauchwasser in den Speicher, wodurch die Verluste bei der Erzeugung von Brauchwasser reduziert werden.

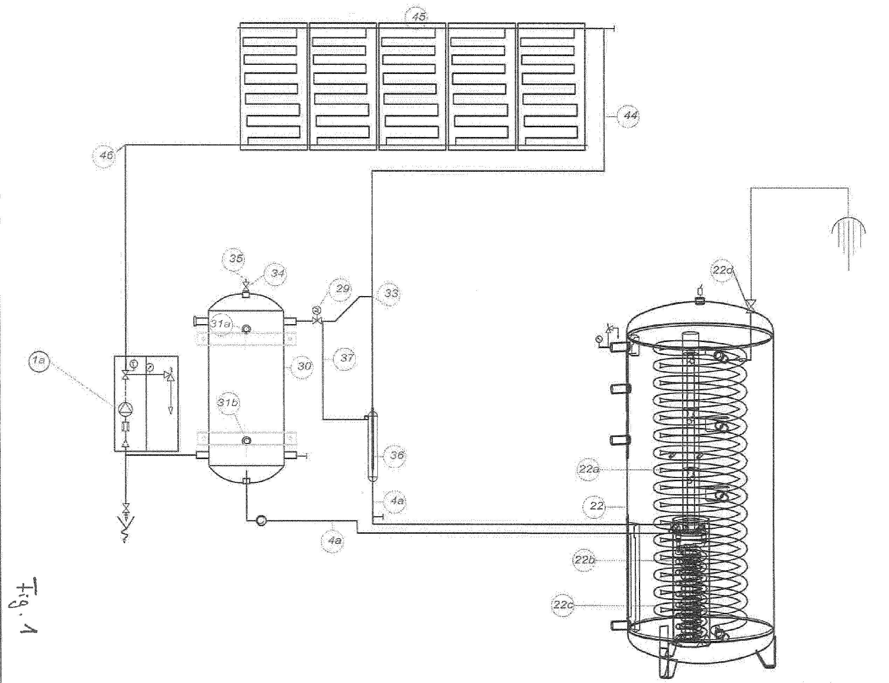

Weitere Vorteile sowie nähere Beschreibungen ergeben sich aus Fig. 1, die die Solaranlage und die Anordnung ihrer Komponenten zeigt.

Gemäß dem erfindungsgemäßen Verfahren zur Inbetriebnahme einer solchen Solaranlage wird in einem ersten Schritt die Anlage auf Dichtigkeit geprüft, in einem zweiten Schritt wird die Anlage über eine Befüll-Vorrichtung (**34 und 35**) mit Wärmeträgerflüssigkeit bis zu einem Niveau des vorzugsweise vorhandenen Schauglases (**31a**) gefüllt wird, in einem weiteren Schritt das Volumen über dem Niveau (**31a**) evakuiert, um danach das besagte Volumen mit Inertgas auf Betriebsdruck zu füllen. Das Volumen oberhalb dem Niveau des vorzugsweise vorhandenen Schauglases (**31a**) im Auffanggefäß und im Förderkreislauf wird vorzugsweise auf einen Unterdruck von 0.01 mBar (0.01 hPa) bis 500 mBar (500 hPa), bevorzugt von 0.2 mBar (0.2 hPa) bis 100 mBar (100 hPa), besonders bevorzugt von 1 mBar (1 hPa) bis 50 mBar (50 hPa) evakuiert.

Das Volumen oberhalb dem Niveau des vorzugsweise vorhandenen Schauglases (**31a**) im Auffanggefäß und im Förderkreislauf wird vorzugsweise mit einem Inertgas, besonders bevorzugt mit mindestens einem oder aus einer Mischung von mindestens zwei oder mehreren der Gase Stickstoff, Argon, Xenon und/oder Helium gefüllt, mit einem Überdruck von 0.25 Bar (250 hPa) bis 6 Bar (6000 hPa), bevorzugt mit einem Überdruck von 0.5 Bar (500 hPa) bis 3,5 Bar (3500 hPa), besonders bevorzugt mit einem Überdruck von 0.5 Bar (500 hPa) bis 1,5 Bar (1500 hPa).

Weitere vorteilhafte Ausgestaltungen der Erfindung ergeben sich aus den abhängigen Ansprüchen und den anhand der Fig. 1 nachfolgend dargestelltem bevorzugtem Ausführungsbeispiel. Dieses Ausführungsbeispiel ist nicht beschränkend auszulegen, sondern dient einzig zur Erläuterung der Erfindung:
Die erfindungsgemäße Solaranlage umfasst mindestens einen Sonnenkollektor (**45**), einen Förderkreislauf aus Wärmetauscher (**22b**) in einer Schichtlanze (**22a**) im Speicher (**22**) und Leitungen (**4a, 44, 46**) in dem eine Pumpeneinheit (**1a**), ein Auffanggefäß (**30**), eine Gasabscheideeinrichtung (**36**) sowie eine Ventileinheit (**29**) eingebaut sind.

An dem Auffanggefäß (**30**) sind zwei Schaugläser **(31a und 31b**) angebracht, wobei das Auffanggefäß (**30**) so ausgelegt ist, daß durch das Schauglas (**31a**) das Füllniveau der Anlage im Stillstand begutachtet werden kann und durch das Schauglas (**31b**) das Füllniveau der Anlage im Betreib begutachtet werden kann. Ferner ist das Auffanggefäß (**30**) mit einer Befüll-Vorrichtung (**34 und 35**) versehen.

Die Vorlaufleitung (**44**) und das Auffanggefäß (**30**) sind über eine Ventileinheit (**29**) oberhalb einer Grenze zwischen der Wärmeträgerflüssigkeit und einem Gas im Auffanggefäß (**30**) miteinander verbunden, wobei der Abgang (**33**) von der Vorlaufleitung (**44**) zur Ventileinheit (**29**) oberhalb dieser Grenze liegt.

Die Rücklaufleitung (**46**) mündet in das Auffanggefäß (**30**) unterhalb einer Grenze zwischen der Wärmeträgerflüssigkeit und dem Gas im Auffanggefäß (**30**).

In der Vorlaufleitung (**44**) ist eine Gasabscheideeinrichtung (**36**) unterhalb der Verbindung (**33**) von der Vorlaufleitung (**44**) zum Auffanggefäß (**30**) angebracht, wobei die gasführende Leitung (**37**) der Gasabscheideeinrichtung (**36**) mit dem oberen Teil des Auffanggefäß (**30**) so verbunden ist, dass die Ventileinheit (**29**) zwischen der Leitung (**37**) und dem Auffanggefäß (**30**) liegt und als Gas ein Inertgas bei einem Druck, der über Atmosphärendruck liegt, eingesetzt wird.

In dem Speicher (**22**) ist ein Edelstahlwärmetauscher eingebaut der mit dem Brauchwasserkreislauf über das Ventil (**22d**) verbunden ist.

### Bezugszeichenliste

- 1a: Pumpeneinheit
- 4a: Leitung
- 22: Speicher
- 22a: Schichtlanze
- 22b: Wärmetauscher
- 22c: Wärmetauscher
- 22d: Ventil zum Brauchwasserkreislauf des Abnehmers
- 29: Ventileinheit
- 30: Auffanggefäß
- 31a: Schauglas
- 31b: Schauglas
- 33: Verbindungsleitung
- 34: Befüll-Vorrichtung
- 35: Befüll-Vorrichtung
- 36: Gasabscheideeinrichtung
- 37: gasführende Leitung
- 44: Vorlaufleitung
- 45: Sonnenkollektor
- 46: Rücklaufleitung

## Patentansprüche

1. Solaranlage bestehend aus Sonnenkollektoren (**45**), Speicher (**22**), einer Pumpenvorrichtung (**1a**) und einem Auffanggefäß (**30**), welche in einem Förderkreislauf mit Leitungen (**4a, 44, 46**) für eine Wärmeträgerflüssigkeit angeordnet sind, wobei der Speicher (**22**) über eine Rücklaufleitung (**46**) und eine Vorlaufleitung (**44**) mit den Sonnenkollektoren (**45**) verbunden ist, **dadurch gekennzeichnet, dass** die Vorlaufleitung (**44**) und das Auffanggefäß (**30**) über eine Ventileinheit (**29**) oberhalb einer Grenze zwischen der Wärmeträgerflüssigkeit und einem Gas im Auffanggefäß (**30**) miteinander verbunden sind und die Mündungen der Rücklaufleitung (**46**) an dem Auffanggefäß (**30**) unterhalb einer Grenze zwischen der Wärmeträgerflüssigkeit und dem Gas im Auffanggefäß (**30**) angeschlossen sind und in der Vorlaufleitung (**44**) eine Gasabscheideeinrichtung (**36**) unterhalb der Verbindung (**33**) von der Vorlaufleitung (**44**) zum Auffanggefäß (**30**) angebracht ist, wobei eine gasführende Leitung (**37**) der Gasabscheideeinrichtung (**36**) mit dem oberen Teil des Auffanggefäßes (**30**) verbunden ist, wobei als Gas ein Inertgas bei einem Druck, der über Atmosphärendruck liegt, eingesetzt wird.

2. Solaranlage nach Anspruch 1, **dadurch gekennzeichnet, dass** die Ventileinheit (**29**) ein Zwei-Wege-Ventil umfasst.

3. Solaranlage nach Anspruch 1 oder 2, **dadurch gekennzeichnet, dass** das Inertgas aus mindestens einem der Gase Stickstoff, Argon, Xenon und Helium oder einer Mischung aus mindestens zweien von diesen gewählt wird.

4. Solaranlage nach einem der Ansprüche 1 bis 3, **dadurch gekennzeichnet, dass** die Pumpenvorrichtung (**1a**) in einem unteren Abschnitt des Förderkreislaufes angebracht ist, der unter der Grenze zwischen der Wärmeträgerflüssigkeit und dem Gas im Auffanggefäß (**30**) liegt.

5. Solaranlage nach einem der Ansprüche 1 bis 4, **dadurch gekennzeichnet, dass** der Druck im Förderkreislauf bei einem Druck von 0.25 Bar (250 hPa) bis 6 Bar (6000 hPa) über Atmosphärendruck liegt.

6. Solaranlage nach einem der Ansprüche 1 bis 5, **dadurch gekennzeichnet, dass** das Auffanggefäß (**30**) mindesten zwei Schaugläser (**31a**) und (**31b**) enthält.

7. Solaranlage nach einem der Ansprüche 1 bis 6, **dadurch gekennzeichnet, dass** die Verbindung (**33**) höher angebracht ist als das Schauglas (**31a**) im Auffanggefäß (**30**).

8. Solaranlage nach einem der Ansprüche 1 bis 7, **dadurch gekennzeichnet, dass** der Speicher (**22**) eine Schichtladelanze (**22a**) enthält mit einem Wärmetauscher (**22b**), der an den Förderkreislauf (**44, 45, 46, 4a**) angeschlossen ist.

9. Solaranlage nach einem der Ansprüche 1 bis 8, **dadurch gekennzeichnet, dass** der Speicher (**22**) einen Wärmetauscher (**22c**) enthält, der über ein Ventil an den Brauchwasserkreislauf (**22d**) angeschlossen ist.

10. Verfahren zur Inbetriebnahme einer Solaranlage nach einem der Ansprüche 1 bis 9, **dadurch gekennzeichnet, dass** in einem ersten Schritt die Anlage auf Dichtigkeit geprüft wird, in einem zweiten Schritt die Anlage über einer Befüll-Vorrichtung (**34 und 35**) mit Wärmeträgerflüssigkeit bis zu einem Niveau (**31a**) gefüllt wird, in einem weiteren Schritt das Volumen über dem Niveau (**31a**) evakuiert wird, um danach das besagte Volumen mit Inertgas auf Betriebsdruck zu füllen.

11. Verfahren nach Anspruch 10, **dadurch gekennzeichnet, dass** die Anlage mit Inertgas auf einen Betriebsduck im Förderkreislauf von 0.25 Bar (250 hPa) bis 6 Bar (6000 hPa) über Atmosphärendruck gefüllt wird.

12. Verfahren nach Anspruch 10 oder 11, **dadurch gekennzeichnet, dass** die Anlage während dem Schritt der Evakuierung auf einen Unterdruck von im Förderkreislauf von 0.01 mBar (0.01 hPa) bis 500 mBar (500 hPa) evakuiert wird.
